# EUROPEAN PATENT SPECIFICATION

(11) **EP 1 405 775 B1**
(45) Date of publication and mention of the grant of the patent: **02.11.2005**
(21) Application number: 02741366.5
(22) Date of filing: 28.06.2002
(51) Int. Cl.: B60R 21/26

(54) **HYBRID INFLATOR**
HYBRIDAUFBLASVORRICHTUNG
DISPOSITIF DE GONFLAGE HYBRIDE

(30) Priority: 29.06.2001 JP 2001199196
(43) Date of publication of application: 07.04.2004
(73) Proprietor: DAICEL CHEMICAL INDUSTRIES, LTD., Sakai-shi, Osaka 590-8501 (JP)
(72) Inventor: KATSUDA, Nobuyuki, Himeji-shi, Hyogo 671-1146 (JP); MATSUDA, Naoki, Himeji-shi, Hyogo 671-1262 (JP)
(74) Representative: Grünecker, Kinkeldey, Stockmair & Schwanhäusser Anwaltssozietät
(86) International application number: PCT/JP2002/006603
(87) International publication number: WO 2003/002382

(56) References cited:
- JP-A- 10 100 849
- JP-A- 10 114 254
- JP-A- 10 278 724
- JP-A- 10 297 416
- JP-A- 11 011 245
- JP-U- 3 040 975
- JP-U- 3 042 073
- US-A- 5 794 973
- US-B1- 6 213 503
- US-B1- 6 231 079

## Description

### Technical Field to which the Invention belongs

The present invention relates to a hybrid inflator according to the preamble of claim 1, which is capable of inflating an air bag reliably and rapidly, and an air bag system using the same.

### Prior Art

A hybrid inflator of the above type is known, for example, from US-A-5,794,973.

With the development of an inflator for an inflating-type safety system of motor vehicles, a hybrid inflator using both a pressurized gas and a solid gas generating agent is attracting attention. A main design requirement for a hybrid inflator is that the inflator inflates an air bag to a predetermined amount in a predetermined time so that the air bas is effectively activated. Various proposals concerning a structure to meet the requirement have heretofore been made.

For example, JP-A 8-282427 discloses a hybrid inflator having such a structure that one gas generating chamber is provided and a pressurized gas is discharged from one end portion of a housing. Therefore, when the inflator is combined with a module case of an air bag, a rectifying plate for discharging the pressurized gas uniformly is required.

Also, USP No. 5,709,406 discloses the one having two gas generating chambers which are completely separated from each other by a partition plate. For this reason, pressurized gases has to be filled in the two gas generating chambers separately and the pressurized gases are discharged from gas discharging holes through individual outflow paths provided for the respective chambers. Therefore, the pressurized gases have to be discharged after rupturing rupturable plates provided for respective outflow paths.

Further, since the hybrid inflator is manufactured to be installed in a motor vehicle, weight and dimensions of the inflator, which have influence upon the weight of the motor vehicle, constitute an important design requirement therefor. And it is demanded to reduce a weight and a number of parts while maintaining function as the hybrid inflator.

### Disclosure of the Invention

An object of the present invention is to provide a hybrid inflator in which a weight of the inflator can be reduced and manufacturing process can be simplified without losing the function of the inflator, and to provide an air bag system using such a hybrid inflator.

The present invention provides, as one means for solving the above problem, the hybrid inflator according to claim 1. In particular, said inflator for an inflating-type safety system of a vehicle is provided with an air bag, which comprises an inflator housing, a gas generating chamber defined inside the inflator housing and provided with a gas generating agent, and an ignition means accommodating chamber provided with an ignition means which is connected to the gas generating chamber, wherein
the inflator housing has two spaces partitioned by a partition plate to be arranged axially in series, a gas generating means and an ignition means accommodating chamber are arranged in both or either of the two spaces, further, a space portion except for the ignition means accommodating chamber is charged with a pressurized medium,
one or plural gas passages connecting the two spaces and one or plural gas discharging holes connecting to an outflow path of the pressurized medium are provided in the partition plate, and
the gas discharging holes communicates with only one space having the ignition means which can first activate or one space in which the ignition means is disposed via a rupturable plate closing a desired portion of the outflow path.

The hybrid inflator of the present invention can employ either structure of one (dual type) in which a gas generating chamber provided with a gas generating agent and an ignition means accommodating chamber provided with an ignition means which ignites and burns the gas generating agent are disposed in the two chambers respectively, and one (single type) in which a gas generating chamber provided with a gas generating agent and an ignition means accommodating chamber provided with an ignition means which ignites and burns the gas generating agent are disposed in only one chamber.

In case of the dual type, ignition and combustion of the gas generating agents in the respective spaces can be staggered or synchronized by staggering or synchronizing activations of the respective ignition means. Incidentally, in the above invention, "ignition means which can first activate" is an ignition means which can be first activated structurally regardless of staggering or synchronizing the activations. Hereinafter, in a case of staggering the ignitions and combustions of the ignition means in the dual type, a space including a gas generating agent which first burns, the gas generating chamber and ignition means accommodating chamber are referred to as a first chamber, a first gas generating chamber and a first ignition means accommodating chamber respectively, and, similarly, the others are referred to as a second chamber, a second gas generating chamber and a second ignition means accommodating chamber. Also, in a case of the single type, since the gas generating chamber and the ignition means accommodating chamber are disposed in only one space, the formers are respectively referred to as a first chamber, a first gas generating chamber and a first ignition means accommodating chamber, while the latter is referred to as a second chamber.

As described above, by employing the structure such that the inflator housing is partitioned by the partition plate to define the first and second chambers, the length of the inflator housing in the axial direction is elongated, but its diameter (or its width) is reduced so that pressure withstanding performance is improved, and thereby, the thickness of the inflator housing can be made thin and the weight can be reduced correspondingly.

As described above, by providing the gas passage connecting the first and second chambers in the partition plate, by charging a pressurized medium in only one of the spaces, the other space can be charged with the pressurized medium, so that a manufacturing step can be simplified. Further, since the first chamber and the second chamber are in communication with each other via only the gas passage, combustion heat of the gas generating agent in the first chamber hardly conducts to the gas generating agent in the second chamber, so that malfunction can be prevented.

As described above, by making the gas discharging hole communicate with only one space having the ignition means which can first activate (dual type) or with one space storing the ignition means (single type), via the rupturable plate closing the desirable portion of the outflow path, namely, by making the gas discharging hole communicate only with the first chamber as described above, just one rupturable plate is required to be disposed in the outflow path of the pressurized medium, and thereby, realizing the weight reduction accordingly. Furthermore, with just one rupturable plate to be ruptured, the rupturable plate can be ruptured more reliably as compared with a case of rupturing two rupturable plates.

Also, in case of the dual type, a high temperature gas (mixed gas) including the combustion gas generated in the second chamber flows in to the first chamber through the gas passage provided in the partition plate, and then, is discharged from the gas discharging hole, so that the gas is further cooled as compared with a case of being discharged from the second chamber directly, and additionally, solidification of mist is promoted by this cooling. In this case, "mist" is solid component (for example, metal component) in the gas generated by combustion of the gas generating agent.

The present invention provides also a hybrid inflator according to dependent claim 2, said inflator for an inflating-type safety system of a vehicle is provided with an air bag, which comprises an inflator housing, a gas generating chamber accommodated in the inflator housing and provided with a gas generating agent, and an ignition means accommodating chamber provided with an ignition means which is connected to the gas generating chamber, wherein
the inflator housing has three or four or more spaces which are partitioned by two or three or more partition plates to be disposed axially in series, the gas generating chamber and the ignition means accommodating chamber are disposed in at least one space, and further a space portion except for the ignition means accommodating chamber is charged with a pressurized medium,
one or plural gas passages connecting three or four or more adjacent spaces are provided in the two or three or more partition plates, and one or plural gas discharging holes connecting to an outflow path of the pressurized medium are provided in at least one of the two or three or more partition plates, and
the gas discharging holes are in communication with only the space having the ignition means which can first activate or only the space in which the ignition means is disposed via a rupturable plate closing a desired portion of the outflow path.

By dividing into three or four or more spaces by the partition plates in this manner, an ejecting amount of a gas can be controlled more finely.

The hybrid inflator of the present invention can employ a structure such that the partition plate is provided at the axial center of the inflator housing or in the vicinity thereof.

By providing the partition plate at the center or in the vicinity thereof in this manner, a rectifying plate does not have to be disposed in a module case of an air bag, so that a weight of the entire air bag system can be reduced. Here, the rectifying plate is a plate disposed to partition between a hybrid inflator and an air bag accommodated in the module case with a plurality of slits with different widths, and it functions so that a gas ejected from the hybrid inflator flows into the air bag uniformly.

Further, as described above, by providing the partition plate at the center or in the vicinity thereof, a gas always can be ejected from the central portion regardless of a mounting direction of the module, and thereby, modules for an air bag system for a so-called right steering wheel vehicle and for a so-called left steering wheel vehicle can be a common specification.

The hybrid inflator of the present invention can employ a structure such that the gas discharging hole is provided in a radial direction of the partition plate, a communicating hole is provided in the thickness direction of the partition plate and these holes do not intersect each other.

The hybrid inflator of the present invention can employ not only a structure such that one or a plurality of the gas discharging holes are provided in the whole or part of the peripheral surface of the partition plate but also a structure such that a plurality of the gas discharging hole are provided in a half or less of the peripheral surface of the partition plate.

A plurality of the gas discharging holes can be provided at equal intervals or at different intervals, but, as described above, in case of providing only one gas discharging holes, it is desirable to attach an adapter, which allows a gas to be ejected in a distributed manner, to the gas discharging hole in view of safety at the time of conveyance or the like. In case of providing only one gas discharging hole, if a gas is ejected due to malfunction, there is a possibility that the hybrid inflator launches like a rocket. However, by attaching an adapter having a plurality of ejecting holes, the above-described unforeseen accident can be avoided. Furthermore, when the gas discharging hole is provided in a half or less of the peripheral surface of the partition plate, an ejecting direction of the gas can be controlled.

The hybrid inflator of the present invention can employ a structure such that the total open area of the gas discharging holes is set to be smaller than the total open area of the gas passages connecting the first chamber and the second chamber. By employing such a structure, an ejecting pressure of a gas can be controlled at the gas discharging hole, so that an ejecting pressure can be controlled easier.

The hybrid inflator of the present invention can employ a structure such that the ignition means accommodating chambers having the ignition means are provided at the axial opposite ends of the inflator housing. Employing such a structure contributes to reduction of the diameter of the inflator housing, as already described.

In the hybrid inflator of the present invention, desirably, the pressurized medium is charged from only one portion of the inflator housing. In the case, it is desirable that it is charged from the partition plate or from either one of the opposite ends.

The hybrid inflator of the present invention is for inflating an air bag utilizing a mixed gas of a combustion gas generated by combustion of the gas generating agent and a pressurized medium charged in the inflator housing, and the gas generating agent and the pressurized medium used in the present invention are not special ones, but they may be determined based on a relation with, for example, a composition of the pressurized medium charged in the inflator housing.

### 1) the pressurized medium including oxygen:

When the pressurized medium consists of oxygen and an inert gas such as argon, helium, etc. or nitrogen gas, the oxygen works so as to convert carbon monoxide and hydrogen generated due to the combustion of a gas generating agent as a gas generating means into carbon dioxide and water vapor, while argon works so as to promote the thermal expansion of the pressurized medium. It is preferable to contain helium in the pressurized medium since the leakage of the pressurized medium can be detected easily, for the purpose of preventing distribution of the imperfect products. Concrete compositions of the pressurized medium including oxygen are determined in accordance with gas generating agent to be used and a kind thereof, and the content of oxygen is preferably about 8 to 30 mol%. A charging pressure of the pressurized medium (=pressure in the inflator housing) is preferably 10, 000 to 70, 000 kPa and more preferably, 30,000 to 60,000 kPa.

As the gas generating agent in the single type hybrid inflator and the dual type hybrid inflator, a gun propellant can be used for example. As the gun propellant, a single-base gun propellant, a double-base gun propellant and a triple-base gun propellant can be used. In addition to them, it is possible to use a gun propellant obtained by mixing a secondary explosive, a bonding agent, a plasticizer and a stabilizer and the like, and molding the resultant mixture to a desired shape.

The secondary explosive can include hexahydrotrinitrotriazine (RDX), cyclotetramethylene tetranitramine (HMX), pentaerithritol tetranitrate (PETN) and triaminoguanidine nitrate (TAGN). For example, when a gas generating agent using RDX as a secondary explosive is burned in an oxygen-absent atmosphere under a pressure of 20,670 kPa and at a combustion temperature of 3348 K, a formed gas in a combustion gas comprises 33 mol% of nitrogen, 25 mol% of carbon monoxide, 23 mol% of vapor, 8 mol% of carbon dioxide and other gas components.

The bonding agent can include cellulose acetate, cellulose acetate butylate, cellulose acetate propiolate, ethyl cellulose, polyvinyl acetate, azide polymer, polybutadiene, polybutadiene hydride and polyurethane; the platicizer can include trimethylolethane trinitrate, butantriol trinitrate, nitroglycerine, bis (2,2-dintropropyl) acetal/formal, glycidyl azide and acetyltriethl citrate and the like; and the stabilizer can include ethlcentralite, diphenylamine and loesosinol.

A preferable ratio of the secondary explosive to the bonding agent, plasticizer and stabilizer is about 50 to 90 wt.% of secondary explosive to about 10 to 50 wt.% of bonding agent, plasticizer and stabilizer in all.

It is difficult in some cases to burn the gas generating agent of the above-described composition under normal pressure. However, in the hybrid inflator according to the present invention, since the interior thereof is maintained at a high pressure in advance, the gas generating agents can be burned stably and smoothly.

### 2) the pressurized medium not including oxygen:

When the pressurized medium consists of substantially an inert gas such as argon, helium, etc. or nitrogen gas, and when the composition does not contain oxygen, argon works so as to promote the thermal expansion of the pressurized medium. It is preferable to contain helium in the pressurized medium since the leakage of the pressurized medium can be detected easily for the purpose of preventing distribution of the imperfect products. And it is preferable that the pressurized medium does not contain oxygen. However, the pressurized medium can contain oxygen in order to improve a combustion of the gas generating agents. In that case, the amount of added oxygen is preferably not more than 10 mol%, and more preferably 5 mol%. A charging pressure of the pressurized medium is preferably 10, 000 to 70,000 kPa and more preferably, 30,000 to 60, 000 kPa.

As the gas generating agent accommodated in the single type hybrid inflator and the dual type hybrid inflator, it is possible to use a material including fuel and oxidizing agent, or fuel, oxidizing agent and slag forming agent which are mixed together with bonding agent if necessary and formed into a desired shape. If such a gas generating agent is used, a gas generated by its combustion can be supplied together with the pressurized medium for developing the air bag. Especially when the gas generating agent including the slag forming agent is used, the amount of mist discharged from the inflator can be reduced much.

Preferably, the fuel can be one or two or more materials selected from a group consisting guanidine derivative such as nitroguanidine (NQ), guanidine nitrite (GN), guanidine carbonate, amino nitroguanicine, amino guanidine nitrite, amino guanidine carbonate, diamino guanidine nitrite, diamino guanidine carbonate, and triamino guanidine nitrite. Further as the fuel, one or two or more materials selected from a group comprising tetrazole and tetrazole derivative can be used.

As oxidizing agent, one or two or more materials selected from a group comprising strontium nitrate, potassium nitrate, ammonium nitrate, potassium perchlorate, copper oxide, ferrous oxide, basic copper nitrate can be used. Preferable composition amount of oxidizing agent is 10 to 80 parts by weight, and more preferably, 20 to 50 parts by weight with respect to 100 parts by weight of fuel.

Preferably, the slag forming agent can be one or two or more materials selected from a group consisting of acid clay, talc, bentonite, diatomaceous earth, kaolin, silica, alumina, sodium silicate, silicon nitride, silicon carbide, hydrotalsite, and a mixture thereof. Preferable composition amount of slag forming agent is 0 to 50 parts by weight, and more preferably, 1 to 10 parts by weight with respect to 100 parts by weight of fuel.

Preferably, the bonding agent can be one or two or more materials selected from a group consisting of sodium salt of sodiumcarboxymethylcellulose, hydroxyethylcellulose, starch, polyvinyl alcohol, guar gum, microcrystal cellulose, polyacrylamide and calcium stearate. Preferable composition amount of the bonding agent is 0 to 30 parts by weight, and more preferably, 3 to 10 parts by weight with respect to 100 parts by weight of fuel.

The present invention provides, as other means for solving the above problem, an air bag system comprising an activation-signal outputting means including an impact sensor and a control unit, and a module case accommodating the above-described hybrid inflator and an air bag.

The air bag system does not require a rectifying plate and it can employ a common specification regardless of a left steering wheel one or a right steering wheel one.

In the above-described air bag system, the hybrid inflator can be disposed in the module case such that its gas discharging hole does not face the air bag. In this case, it is desirable to dispose the hybrid inflator such that the gas discharging hole of the hybrid inflator faces a wall of the module case in the opposite direction to the air bag.

By mounting the hybrid inflator in this manner, a mixed gas with a high temperature can once strike against the module case wall, not ejecting the mixed gas to the air bag directly, so that a temperature of the mixed gas can be lowered correspondingly.

The present invention provides, as other means for solving the above problem, an air bag system comprising an activation-signal outputting means including an impact sensor and a control unit, the above-described hybrid inflator and a module case accommodating an air bag, wherein the hybrid inflator is disposed outside the module case.

By disposing the hybrid inflator outside the module case in this manner, the module case itself can be made smaller, so that the entire air bag system can be made smaller and light-weight.

In the above-described invention, it is desirable that the hybrid inflator and the module case are connected and fixed to each other at the gas discharging hole of the hybrid inflator and a gas introducing hole of the module case. In this case, it is desirable to fix the hybrid inflator to an outer wall of the module case and to use a box-shaped member which can introduce a gas for inflating an air bag into the module case.

The hybrid inflator of the present invention can be reduced in weight as compared with the conventional hybrid inflator while maintaining an excellent performance as an inflator, and the manufacturing process can be simplified.

### Brief description of the drawings

Fig. 1 is a sectional view of a hybrid inflator (dual type) of the present invention in the axial direction.
Fig. 2 is a sectional view of a partition plate of Fig. 1 in the radial direction.
Figs. 3 are explanatory diagrams of the arrangement of a gas discharging hole in the hybrid inflator of Fig. 1.
Fig. 4 is a sectional view in which the hybrind inflator in Fig. 1 is partially modified.
Fig. 5 is a sectional view of a hybrid inflator (single type) of the present invention in the axial direction.
Fig. 6 is a sectional view of a hybrid inflator in the axial direction.
Fig. 7 is a conceptual diagram for explaining an air bag system of the present invention.
Fig. 8 explains a conceptual diagram in the plan view direction of another air bag system of the present invention.
Fig. 9 is a conceptual diagram in a side direction of the air bag system in Fig. 8.

### Description of Numerals

- 100: hybrid inflator
- 101: inflator housing
- 102: partition plate
- 103: gas discharging hole
- 104: gas passage
- 105: principal rupturable plate
- 110: first chamber
- 112: first gas generating chamber
- 116: first gas generating agent
- 132: first ignition means accommodating chamber
- 134: first igniter
- 150: second chamber
- 152: second gas generating chamber
- 156: second gas generating agent
- 172: second ignition means accommodating chamber
- 174: second igniter
- 200: hybrid inflator
- 300: hybrid inflator
- 400: air bag system
- 450: air bag system

### Preferred Embodiment of the Present Invention

A hybrid inflator of the present invention is most characterized by providing a partition plate having a specific structure to have two or three or more spaces, and gas generating chambers accommodated in two spaces (a first chamber and a second chamber) or three or more spaces and an ignition means accommodating chamber provided with an ignition means may have known structures or structures modified by those skilled in the art.

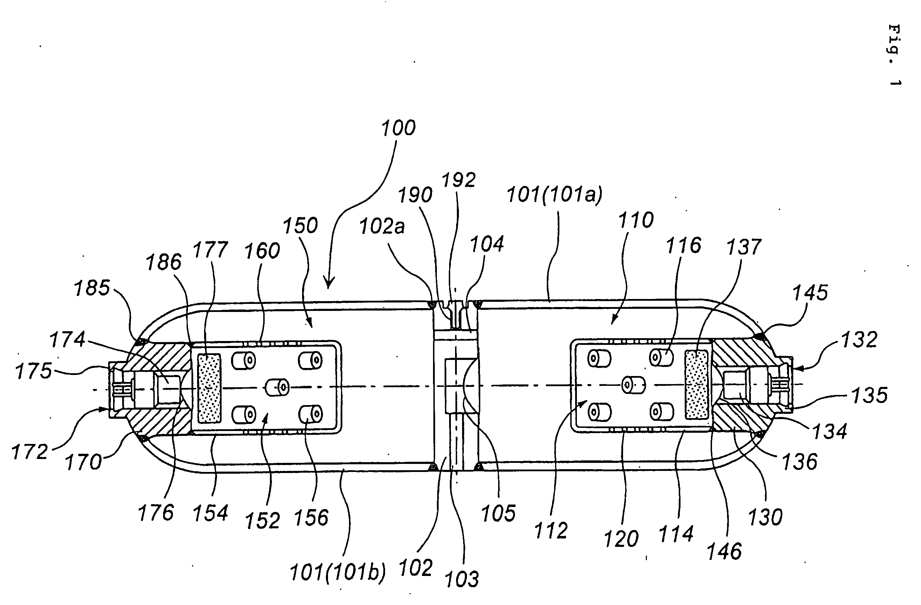

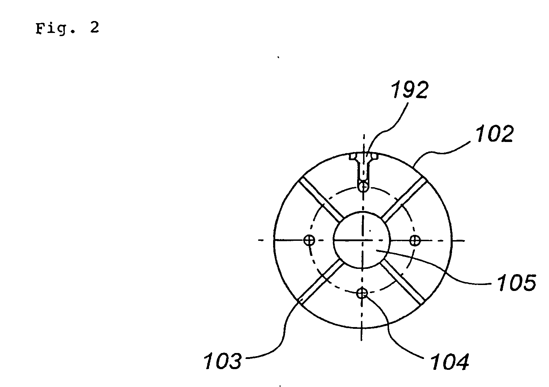

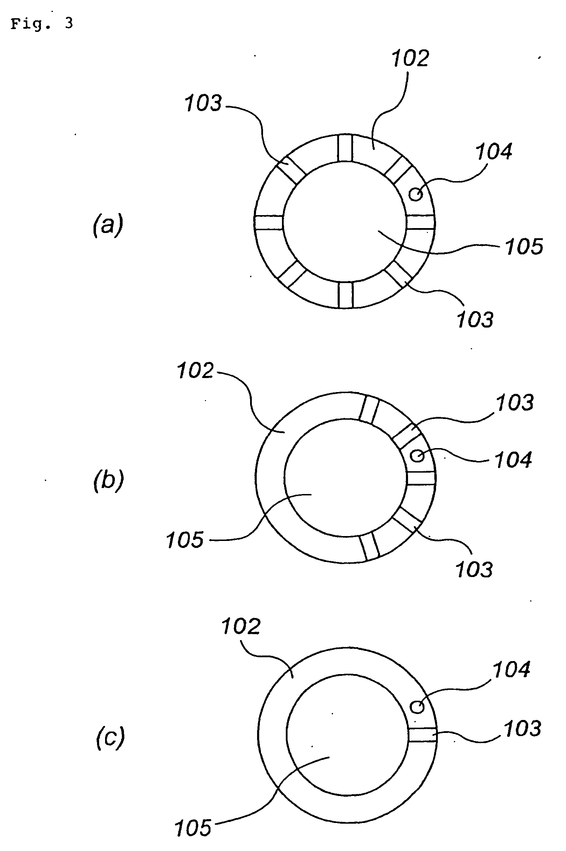

One embodiment (a dual type) of the present invention will be explained below with reference to the drawings. Fig. 1 is a sectional view of a hybrid inflator of the present invention in the axial direction thereof, Fig. 2 is a sectional view in the radial direction at a partition plate 102 of Fig. 1, and Figs. 3 are sectional views in the radial direction for explaining the arrangements of a gas discharging hole of a hybrid inflator.

In a hybrid inflator 100 shown in Fig. 1 and Fig. 2, a cylindrical inflator housing 101 is divided into two (101a and 101b) by a partition plate 102 provided at the axial center of the inflator housing 101 or in the vicinity thereof, and a first chamber 110 and a second chamber 150 arranged axially in series are provided.

The partition plate 102 is fixed to the inflator housing 101 by welding (or a screw) (102a in the drawing), and it has four gas discharging holes 103 provided radially and four gas passages 104 provided in the thickness direction to make the first chamber 110 and the second chamber 150 communicated with each other. The gas discharging holes 103 communicates with only the first chamber 110 via a principal rupturable plate 105, and the gas discharging holes 103 and the gas passages 104 do not intersect each other. Since the total open area of the gas discharging holes 103 is set to be smaller than the total open area of the gas passages 104, the ejecting pressure of the mixed gas is controlled by the gas discharging holes 103.

Kinds of the materials constituting the inflator housing 101 and the partition plate 102 are not limited to specific ones, but desirably, they are the same material in view of a welding facility or the like. For example, stainless steel can be used as the material.

At a desired position in a mixed gas outflow path from the principal rupturable plate 105 to the gas discharging holes 103, a screen for removing foreign matters (for example, fragments of the principal rupturable plate 105) contained in the mixed gas, such as a wire mesh, can be arranged.

As shown in Fig. 3 (a), a plurality of the gas discharging holes 103 may be provided at equal intervals (or different intervals) on the entire peripheral surface of the partition plate 102. Or as shown in Fig. 3(b), a plurality of the gas discharging holes 103 may be provided at equal intervals (or different intervals) in one half or less of the peripheral surface of the partition plate 102. Or as shown in Fig. 3(c), only one gas discharging hole may be provided in the partition plate 102. Incidentally, Figs. 3 are used only for explaining the arrangements of the gas discharging holes 103.

Next, the first chamber 110 which is one space defined by dividing the inflator housing 101 with the partition plate 102 will be explained.

A first gas generating chamber 112 whose outer shell is formed by a first gas generating chamber housing 114 is disposed in the first chamber 110, and a required amount of a first gas generating agent 116 is stored in the first gas generating chamber 112. The volume of the first gas generating chamber 112 can be adjusted by a retainer (partition wall) according to an amount of the first gas generating agent 116 to be used.

A required number of first communication holes 120 for discharging a combustion gas generated by combustion of the first gas generating agent 116 are provided in the first gas generating chamber housing 114. The first communication holes 120 are provided on the entire peripheral surface of the first gas generating chamber housing 114. Also, a diameter of the first communication hole 120 is adjusted not to allow the first gas generating agent 116 to leak out, and a screen comprising a wire mesh or the like can be disposed inside or outside the first communication holes 120.

A first ignition means accommodating chamber 132 is formed by a boss 130 mounted to one end of the inflator housing 101, and a first igniter 134 is fitted into the interior of the boss, and the first igniter 134 is crimped by one portion 135 of the boss 130.

A transfer charge 137 filled in an aluminum cap or the like is arranged and fixed inside the first gas generating chamber 112 to be exactly opposite to a distal end portion of the first igniter 134 via a first rupturable plate 136.

The inflator housing 101a is welded and fixed to the boss 130 at a position represented by a reference numeral 145, and the gas generating chamber housing 114 is welded and fixed to the boss 130 at a position represented by a reference numeral 146.

Next, the second chamber 150 which is the other space defined by dividing the inflator housing 101 with the partition plate 102 will be explained.

A second gas generating chamber 152 whose outer shell is formed by a second gas generating chamber housing 154 is disposed in the second chamber 150, and a required amount of second gas generating agent 156 is stored in the second gas generating chamber 152. A volume of the second gas generating chamber 152 can be adjusted by a retainer (partition wall) according to an amount of the second gas generating agent 156 to be used.

A required number of second communication holes 160 for discharging a combustion gas generated by combustion of the second gas generating agent 156 are provided in the second gas generating chamber housing 154. The second communication holes 160 are provided on the entire peripheral surface of the second gas generating chamber housing 154. Also, a diameter of the second communication hole 160 is adjusted not to allow the second gas generating agent 156 to leak out, and a screen comprising a wire mesh or the like can be disposed inside or outside the second communication holes 160.

A second ignition means accommodating chamber 172 is formed by a boss 170 mounted to the other end of the inflator housing 101, and a second igniter 174 is fitted into the interior of the boss and the second igniter 174 is crimped by one portion 175 of the boss 170.

A transfer charge 177 filled in an aluminum cap or the like is arranged and fixed in the second gas generating chamber 152 to be exactly opposite to a distal end portion of the second igniter 174 via a second rupturable plate 176.

The inflator housing 101b is welded and fixed to the boss 170 at a position represented by a reference numeral 185, and the gas generating chamber housing 154 is welded and fixed to the boss 170 at a position represented by a reference numeral 186.

In the first chamber 110 and the second chamber 150, a pressurized medium is charged under a high pressure into spaces respectively defined by the inflator housing 101a and 101b, the first and second gas generating housings 114 and 154 and the partition plate 102, and in the first and second gas generating chambers 112 and 152. In this manner, the pressurized medium charged in the inflator housing 101 under a high pressure flows into the first gas generating chamber 112 and the second gas generating chamber 152 which are in communication with each other via the first communication holes 120 and the second communication holes 160 before activation of the hybrid inflator 100. And the inside of these chambers are maintained at the same high pressure. Incidentally, the mixed gas outflow path from the principal rupturable plate 105 to the gas discharging holes 103 is maintained in an atmospheric pressure.

A charging hole 190 for the pressurized medium is provided in the partition plate 102 and, as shown in the drawing, the charging hole 190 is closed by a seal pin 192 after the pressurized medium is filled. Incidentally, the charging holes 190 may be provided in the boss 130, the boss 170 and the inflator housing 101.

The above-described hybrid inflator 100 shown in Fig. 1 and Fig. 2 can obtain the following operational effects on the basis of its structure.
(a) In the hybrid inflator 100, the first chamber 110 including the first gas generating chamber 112 and the second chamber 150 including the second gas generating chamber 152 are arranged axially in series, and the igniters 134 and 174 are disposed at the opposite end portions of the inflator housing 101. Accordingly, a diameter of the inflator housing 101 can be reduced as compared with an inflator housing in which igniters are arranged radially in parallel with each other, thereby, enhancing pressure withstanding. For this reason, the thickness of the inflator housing 101 is made thin, so that the weight can be reduced correspondingly.
(b) In the hybrid inflator 100, the mixed gas can be discharged from the central portion. Therefore, a rectifying plate required in a hybrid inflator in which a mixed gas is discharged from an end portion is unnecessary when the inflator is applied to an air bag system.
(c) In the hybrid inflator 100, the first chamber 110 and the second chamber 150 are in communication with each other via the gas passage 104. Therefore, when the pressurized medium is charged from the pressurized medium charging hole 190 in a manufacturing step, the pressurized medium flows into both of the first chamber 110 and the second chamber 150 through the gas passages 104, so that the pressurized medium can be filled by one charging work.
(d) In the hybrid inflator 100, the first chamber 110 and the second chamber 150 are in communication with each other through only the gas passages 104. Therefore, the combustion heat of the first chamber 110 can hardly conduct to the second chamber 150.
(e) Since the mixed gas in the second chamber 150 is discharged always after it flows into the first chamber 110 through the gas passages 104, the mixed gas is cooled in a proper extent in the course of such an outflow. As a result, the temperature of the mixed gas is not only lowered but also the mist contained in the mixed gas is easily solidified.

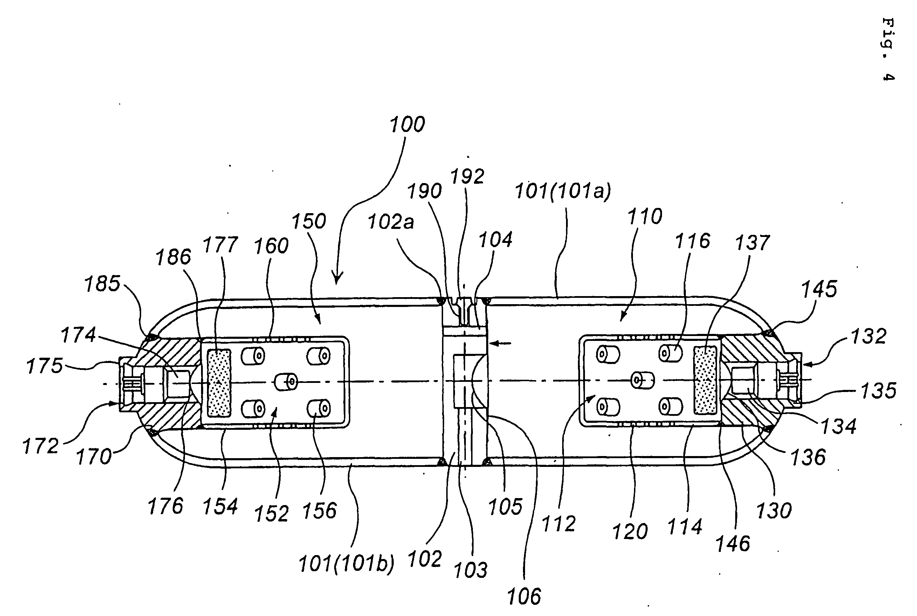

Further, as shown in Fig. 4, the hybrid inflator 100 of Fig. 1 can be constituted such that, using a principal rupturable plate 105 in a shape such that its opening portion peripheral edge is expanded radially, the gas passages 104 is covered at a peripheral edge portion 106 from the first chamber 110 side. In this time, by welding the principal rupturable plate 105 at a portion indicated by an arrow, the gas passage 104 remained closed by function of the peripheral edge portion 106, when the pressure in the first chamber 110 increases, however, when the pressure in the second chamber 150 increases, the peripheral edge portion 106 is turned up (is broken) by the pressing pressure. Also, as shown in the drawing, instead of using the principal rupturable plate 105 having the peripheral edge portion 106, in the hybrid inflator 100 of Fig. 1, the gas passages 104 may be covered from the first chamber 110 side by attaching a metal foil such as an aluminum tape.

By employing the structure shown in Fig. 4 or the structure using the metal foil in this manner, the operational effect of the above-described item (d) can be further enhanced.

Next, with reference to Fig. 1, an operation of the hybrid inflator 100 will be explained. Incidentally, the first igniter 134 and the second igniter 174 can simultaneously be activated, however, the following is a description of a case such that the first igniter 134 is first activated and the second igniter 174 is activated with a delay therefrom.

In the event of a vehicle collision, after the first igniter 134 is activated and ignited by the activation-signal outputting means to rupture the first rupturable plate 136, the transfer charge 137 is ignited and burnt to generate a high temperature gas (flame). And the first gas generating agent 116 in the first gas generating chamber 112 is ignited and burnt by the flame, thereby generating a high temperature gas. The high temperature gas flows out from the first communication hole 120 to form a mixed gas together with the pressurized medium and then, increases the internal pressure in the first chamber 110, so that the principal rupturable plate 105 is ruptured rapidly. As a result, the first chamber 110 connects to the atmospheric portion, and the mixed gas is instantaneously ejected from the gas discharging holes 103 through the ruptured principal rupturable plate 105 to inflate the air bag. At this time, the interior of the second chamber 150 is maintained at a high pressure, and thereby, the mixed gas in the first chamber 110 flows in the direction of the gas discharging holes 103 which are the atmospheric portions and it never flows into the second chamber 150 through the gas passages 104.

After the second igniter 174 is activated and ignited slightly after the activation and ignition of the first igniter 134 to rupture the second rupturable plate 176, the transfer charge 177 is ignited and burnt to generate a high temperature gas (flame), and the second gas generating agent 156 in the second gas generating chamber 152 is ignited and burnt by the flame, thereby generating a high temperature gas. The high temperature gas flows out from the second communication hole 160 to form a mixed gas together with the pressurized medium and increase the internal pressure in the second chamber 150. After the mixed gas flows into the first chamber 110 through the gas passages 104, it is ejected from the gas discharging holes 103 through the ruptured principal rupturable plate 105 to further inflate the air bag.

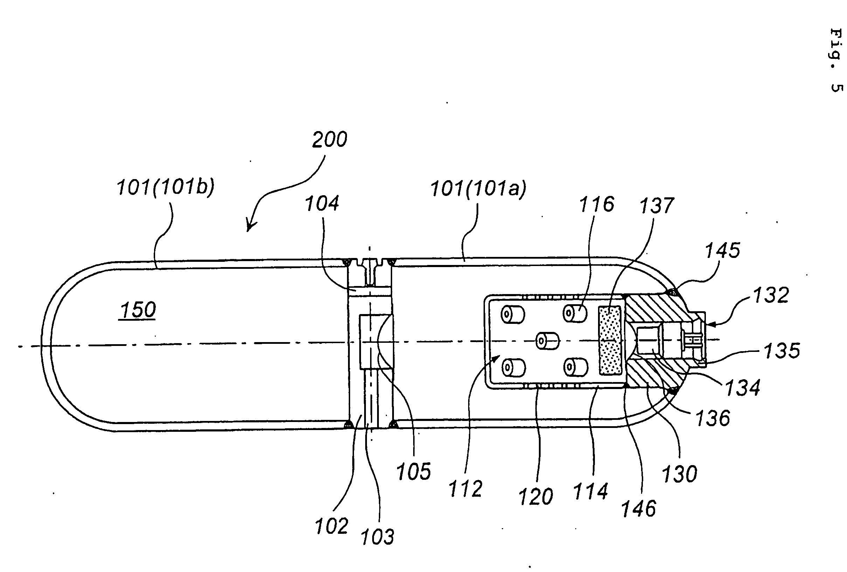

Next, another embodiment (a single type) of the present invention will be explained with reference to Fig. 5. Fig. 5 is a sectional view of a hybrid inflator of the present invention in the axial direction thereof.

A hybrid inflator 200 of Fig. 5 is, as apparent from the drawing, entirely the same as the hybrid inflator of Fig. 1 except that the second combustion chamber 150 is filled only with the pressurized medium. Even in the hybrid inflator 200 shown in Fig. 5, the above-described operational effects (a) to (c) can be obtained.

In the hybrid inflator 200, after the principal rupturable plate 105 is ruptured due to increase pressure in the first chamber 110, the pressurized medium in the second chamber 150 flows into the first chamber 110 through the gas passages 104 together with outflow of the mixed gas in the first chamber 110, and it is then ejected from the gas discharging holes 103. In the hybrid inflator 200, it can be regarded that the first chamber 110 and the second chamber 150 form one chamber (space) as a whole. By dividing into two spaces in this manner, the outflow speed of the pressurized medium in the second chamber 150 is made slow as compared with a case of not dividing into two spaces, so that the ejecting speed (inflating speed of an air bag) can be controlled.

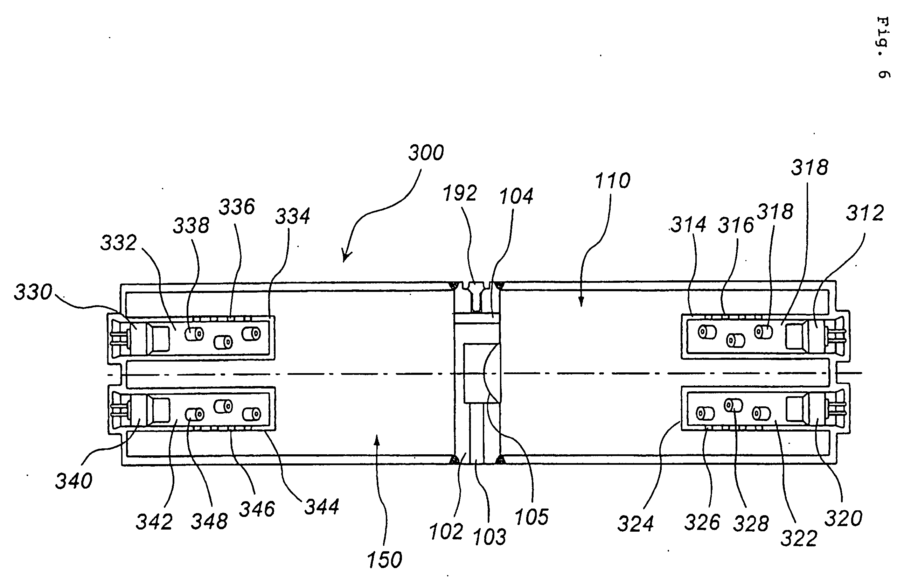

Next, a dual type hybrid inflator including four igniters will be explained with reference to Fig. 6. Fig. 6 is a sectional view of this dual type hybrid inflator in the axial direction thereof. The hybrid inflator shown in Fig. 6 does not fall under the scope of the claims.

In a hybrid inflator 300, an inflator housing 101 is partitioned at its central portion by a partition plate 102 to define a first chamber 110 and a second chamber 150 like the above-described hybrid inflators 100 and 200. A reference numeral 103 represents a gas discharging hole, a reference numeral 104 represents a gas passage, a reference numeral 105 represents a principal rupturable plate and a reference numeral 192 represents a seal pin.

The first chamber 110 has first-a and first-b gas generating chambers 318 and 322 whose outer shells are respectively formed by first-a and first-b gas generating chamber housings 314 and 324, which are respectively connected to first-a and first-b igniters 312 and 320. Reference numerals 316 and 326 represent first-a and first-b communication holes, and reference numerals 350 and 328 represent first-a and first-b gas generating agents, respectively.

The second chamber 150 has second-a and second-b gas generating chambers 332 and 342 whose outer shells are respectively formed by second-a and second-b gas generating chamber housings 334 and 344, which are respectively connected to second-a and second-b igniters 330 and 340. Reference numerals 336 and 346 represent second-a and second-b communication holes, and reference numerals 338 and 348 represent second-a and second-b gas generating agents.

In the hybrid inflator 300, the gas passages 104 can be covered with a peripheral edge portion 106 of the principal rupturable plate 105 or a metal foil from the first chamber 110 side like the hybrid inflator 100 shown in Fig. 4.

In the hybrid inflator 300, by selecting one to four from the first-a, first-b, second-a and second-b igniters 312, 320, 330 and 340 to activate the same, an ejecting amount of the mixed gas into the air bag can finely be controlled, so that the inflating speed and the inflating pressure of the air bag can easily be adjusted in proportion to magnitude of the impact in the event of a vehicle collision.

Next, an air bag system of the present invention will be explained. Though all of the hybrid inflators shown in Figs. 1, 4, 5 can also be applied to the air bag system of the present invention, the following is a description of a case such that the dual type hybrid inflator shown in Figs. 1 and 4 is used.

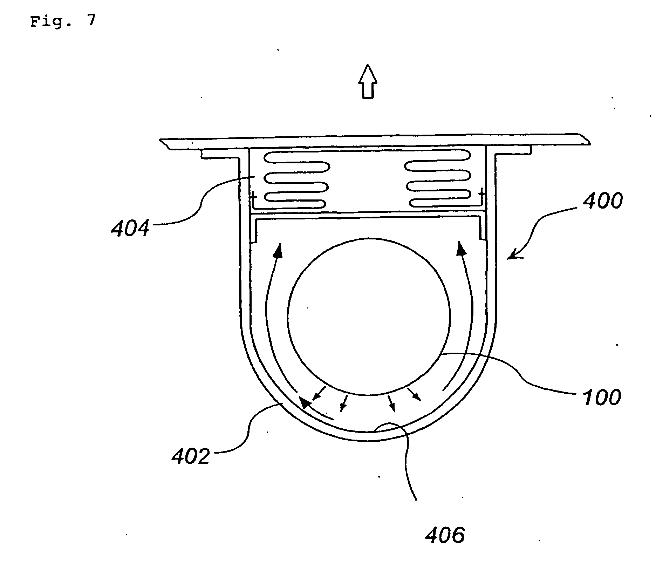

First, one embodiment of an air bag system will be explained with reference to Fig. 7. Fig. 7 is a conceptual diagram of an air bag system in the widthwise direction thereof (a direction corresponding to the radial direction of the hybrid inflator assembled in the system). The white arrow indicates a developing direction of an air bag, i.e., in a direction where a vehicle occupant exists, and the arrows indicates ejecting directions of a mixed gas.

An air bag system 400 comprises an activation-signal outputting means including an impact sensor and a control unit, and a module in which module case 402 accommodates the hybrid inflator 100 and an air bag 404. The hybrid inflator 100 is connected to the activation-signal outputting means (the impact sensor and the control unit) at the first igniter 134 and the second igniter 174, and it is fixed in the module case 402 mounted with the air bag 404. At this time, though the arrangement of the gas discharging hole 104 of the hybrid inflator 100 may be either one of the arrangements shown in Figs. 3 (a) to 3(c), in the case of the arrangement shown in Fig. 3(b) or 3(c), such an arrangement is made that the orientation of the gas discharging hole 103 does not direct toward the air bag 404, preferably a direction reverse to the air bag 404, and it directs toward an inner wall 406 of the module case 402 (Fig. 7 shows a case that the gas discharging hole 103 takes the aspect shown in Fig. 3 (b)). In the air bag system 400 having such a structure, it is possible to adjust an amount of gas generated in accordance with a degree of the impact, and to adjust the inflating speed of the air bag 404 by appropriately setting the output condition of the activation signal in the activation-signal outputting means.

In the air bag system 400, since a mixed gas is ejected from the central portion of the hybrid inflator 100, it is unnecessary to dispose a rectifying plate inside the module case 402. Also, a common specification can be employed regardless of a right steering wheel vehicle or a left steering wheel vehicle.

Further, in the air bas system 400, when the arrangement of the gas discharging hole 103 is in the state shown in Fig. 3(b), by mounting the hybrid inflator 100 such that the orientation of the gas discharging hole 103 directs oppositely to the inner wall 406, the ejecting mixed gas can be flown in the air bag 404 after it is once struck against the inner wall 406. For this reason, the temperature of the mixed gas can be lowered correspondingly.

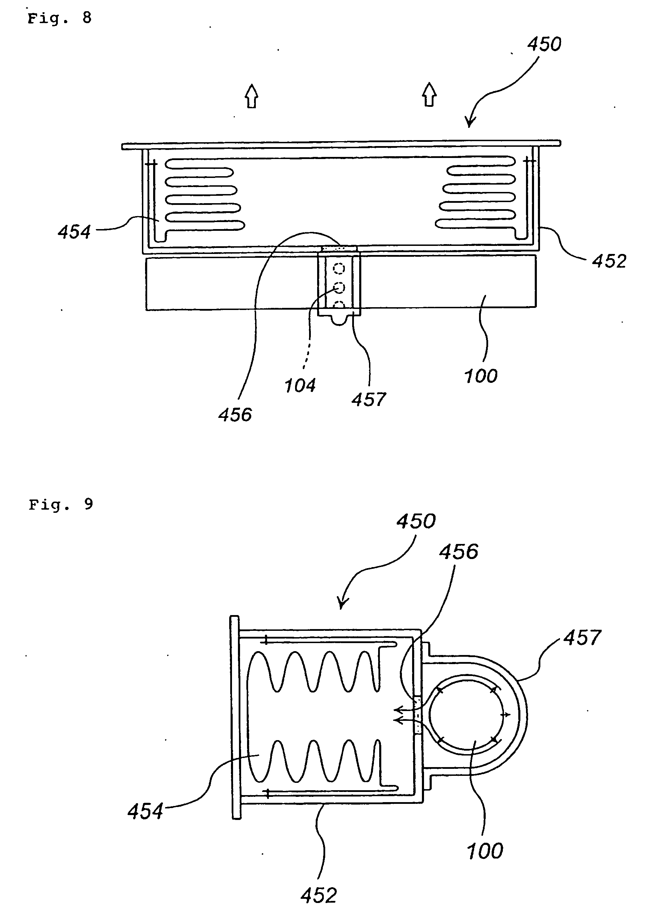

Next, other embodiment of an air bag system will be explained with reference to Fig. 8 and Fig. 9. Fig. 8 is a conceptual diagram of an air bag system in the longitudinal direction (a direction corresponding to the axial direction of the hybrid inflator 100 assembled in the system), and Fig. 9 is a conceptual diagram of the air bag system in the widthwise direction (a direction corresponding to the radial direction of the hybrid inflator 100 assembled in the system). The white arrow in Fig. 8 indicates a developing direction of an air bag, i.e., a direction where a vehicle occupant exists, and the arrows in Fig. 9 indicate ejecting directions of a mixed gas.

An air bag system 450 comprises an activation-signal outputting means including an impact sensor and a control unit, and a module, and the module comprises a module case 452 which accommodates an air bag 454, and a hybrid inflator 100 mounted outside the module case 452. The hybrid inflator 100 and the module case 452 are connected and fixed to each other at the gas discharging hole 103 of the hybrid inflator 100 and a gas introducing hole 456. The connection and fixation are performed by a box-shaped member 457 which fixes the hybrid inflator 100 to an outer wall of the module case 452 and that can introduce a gas for inflating the air bag 454 into the module case 452.

## Claims

1. A hybrid inflator (100) for an inflating-type safety system (400,450) of a vehicle provided with an air bag (404,454), which comprises an inflator housing (101), a gas generating chamber (112,152) accommodated in the inflator housing (101) and provided with a gas generating agent (116,156), and an ignition means accommodating chamber (132,172) provided with an ignition means (134,174) which is connected to the gas generating chamber (112,152), wherein
the inflator housing (101) has at least two spaces (110,150) partitioned by at least one partition plate (102) to be arranged axially in series, the gas generating chamber (112,152) and the ignition means accommodating chamber (132,172) are disposed in at least one space, further a space portion except for the ignition means accommodating chamber (132,172) is charged with a pressurized medium,
one or plural gas passages (104) connecting the at least two spaces (110,150) and one or plural gas discharging holes (103) connecting to an outflow path of the pressurized medium are provided in at least one partition plate (102),
**characterised by**: the at least one gas discharging hole (103) communicates with only one space (110) having the ignition means (134) which can first activate chronologically or one space (110) in which the ignition means (134) is disposed, via a rupturable plate (105) closing a desired portion of the outflow path.

2. A hybrid inflator (100) as claimed in claim 1, wherein the inflator housing has three or four or more spaces partitioned by two or three or more partition plates (102) to be disposed axially in series.

3. A hybrid inflator (100) as claimed in claim 1 or 2, wherein the partition plate having the gas discharging hole (103) is provided at the axial central portion of the inflator housing (101) or in the vicinity thereof.

4. A hybrid inflator (100) as claimed in any one of claims 1 to 3, wherein the gas discharging hole (103) is provided in the radial direction of the partition plate (102), the communication hole (104) is provided in the thickness direction of the partition plate (102), and the gas discharging hole (103) and the communication hole (104) do not intersect each other.

5. A hybrid inflator (100) as claimed in any one of claims 1 to 4, wherein one or plural gas discharging hole (103) is provided in the whole portion or part of the peripheral surface of the partition plate (102).

6. A hybrid inflator (100) as claimed in any one of claims 1 to 4, wherein plural gas discharging holes (103) is provided in one half or less of the peripheral surface of the partition plate (102).

7. A hybrid inflator (100) as claimed in any one of claims 1 to 6, wherein the total open area of the gas discharging holes (103) is set to be smaller than the total open area of the gas passages (104).

8. A hybrid inflator(100) as claimed in any one of claims 1 to 7, wherein the ignition means accommodating chamber (132,172) having the ignition means (134,174) is provided axially at the opposite ends or either one end of the inflator housing (101).

9. A hybrid inflator (100) as claimed in any one of claims 1 to 8, wherein the pressurized medium is charged from only one charging hole (190).

10. An air bag system (400,450) comprising an activation-signal outputting means including an impact sensor and a control unit, and a module case (402,452) accommodating a hybrid inflator (100) as claimed in any one of claims 1 to 9 and an air bag (404,454).

11. An air bag system (400,450) as claimed in claim 10, wherein the hybrid inflator (100) is disposed in the module case (402,452) so that the gas discharging hole (103) does not face the air bag (404,454).

12. An air bag system (400,450) as claimed in claim 11, wherein the hybrid inflator (100) is disposed so that the gas discharging hole (103) faces a wall (406) of the module case (402,452), which is the opposite direction to the air bag (404,454).

13. An air bag system (450) comprising an activation-signal outputting means including an impact sensor and a control unit, a hybrid inflator (100) as claimed in any one of claims 1 to 9 and a module case (452) accommodating an air bag (454), wherein the hybrid inflator (100) is disposed outside the module case (452).

14. An air bag system (450) as claimed in claim 13, wherein the hybrid inflator (100) and the module case (452) are connected and fixed to each other at the gas discharging hole (103) of the hybrid inflator (100) and a gas introducing hole (456) of the module case (452).

15. An air bag system as claimed in claim 14, wherein the hybrid inflator (100) and the module case (452) are connected and fixed by a box-shaped member (457) which fixes the hybrid inflator (100) to an outer wall of the module case (452) and can introduce a gas for inflating the air bag (454) into the module case (452).

## Patentansprüche

1. Ein Hybridgasgenerator (100) für ein mit einem Airbag (404, 454) ausgestattetes Sicherheitssystem einer sich aufblasenden Bauart (400, 450) eines Fahrzeugs, welcher umfasst: ein Gasgeneratorgehäuse (101), eine Gaserzeugungskammer (112, 152), die in dem Gasgeneratorgehäuse (101) aufgenommen ist und mit einem Gaserzeugungswirkstoff (116, 156) versehen ist, und eine Zündmittelanordnungskammer (132, 172), die mit einem Zündmittel (134, 174) versehen ist, welches an die Gaserzeugungskammer (112, 152) angeschlossen ist, wobei
das Gasgeneratorgehäuse (101) zumindest zwei Räume (110, 150) umfasst, die durch zumindest eine Trennplatte (102) unterteilt sind, um axial in Reihe angeordnet zu sein, wobei die Gaserzeugungskammer (112, 152) und die Zündmittelanordnungskammer (132, 172) in zumindest einem Raum angeordnet sind, femer ein Raumabschnitt außer der Zündmittelanordnungskammer (132, 172) mit einem mit Druck beaufschlagten Medium gefüllt ist,
wobei einer oder mehrere, die zumindest zwei Räume (110, 150) verbindende Gasdurchgänge (104), und eine oder mehrere, an einen Ausflusspfad des mit Druck beaufschlagten Mediums angeschlossene Gasauslassöffnungen (103), in zumindest einer Trennplatte (102) vorgesehen sind,
**dadurch gekennzeichnet, dass** die zumindest eine Gasauslassöffnung (103) über eine aufbrechbare Platte (105), die einen gewünschten Abschnitt des Ausflusspfades verschließt, mit nur einem Raum (110) mit dem Zündmittel (134), welches in chronologischer Reihenfolge zuerst aktivieren kann, oder einem Raum (110), in welchem das Zündmittel (134) angeordnet ist, in Verbindung steht.

2. Ein Hybridgasgenerator (100) nach Anspruch 1, wobei das Gasgeneratorgehäuse drei oder vier oder mehrere Räume umfasst, die von zwei oder drei oder mehreren Trennplatten (102) unterteilt werden, um axial in Reihe angeordnet zu sein.

3. Ein Hybridgasgenerator (100) nach Anspruch 1 oder 2, wobei die Trennplatte mit der Gasauslassöffnung (103) in dem axial mittigen Abschnitt des Gasgeneratorgehäuses (101) oder in dessen Nähe vorgesehen ist.

4. Ein Hybridgasgenerator (100) nach einem der Ansprüche 1 bis 3, wobei die Gasauslassöffnung (103) in der radialen Richtung der Trennplatte (102) ausgebildet ist, die Kommunikationsöffnung (104) in der Richtung der Dicke der Trennplatte (102) ausgebildet ist, und die Gasauslassöffnung (103) und die Kommunikationsöffnung (104) sich nicht miteinander schneiden.

5. Ein Hybridgasgenerator (100) nach einem der Ansprüche 1 bis 4, wobei eine oder eine Vielzahl von Gasauslassöffnungen (103) in dem gesamten Abschnitt oder einem Teil der Umfangsoberfläche der Trennplatte (102) vorgesehen ist.

6. Ein Hybridgasgenerator (100) nach einem der Ansprüche 1 bis 4, wobei eine Vielzahl von Gasauslassöffnungen (103) in einer Hälfte oder weniger der Umfangsoberfläche der Trennplatte (102) vorgesehen ist.

7. Ein Hybridgasgenerator (100) nach einem der Ansprüche 1 bis 6, wobei die Gesamtöffnungsfläche der Auslassöffnungen (103) dazu bestimmt ist, kleiner zu sein als die Gesamtöffnungsfläche der Gasdurchgänge (104).

8. Ein Hybridgasgenerator (100) nach einem der Ansprüche 1 bis 7, wobei die Zündmittelanordnungskammer (132, 172) mit dem Zündmittel (134, 174) axial an den entgegengesetzten Enden oder einem der Enden des Gasgeneratorgehäuses (101) vorgesehen ist.

9. Ein Hybridgasgenerator (100) nach einem der Ansprüche 1 bis 8, wobei das mit Druck beaufschlagte Medium durch nur eine Einfüllöffnung (190) eingefüllt wird.

10. Ein Airbagsystem (400, 450), umfassend ein Aktivierungssignalausgabemittel mit einem Aufprallsensor und einer Steuereinheit, und ein Modulgehäuse (402, 452) zur Aufnahme eines Hybridgasgenerators (100) nach einem der Ansprüche 1 bis 9 und eines Airbags (404, 454).

11. Ein Airbagsystem (400, 450) nach Anspruch 10, wobei der Hybridgasgenerator (100) in dem Modulgehäuse (402, 452) angeordnet ist, so dass die Gasauslassöffnung (103) dem Airbag (404, 454) nicht gegenüber steht.

12. Ein Airbagsystem (400, 450) nach Anspruch 11, wobei der Hybridgasgenerator (100) so angeordnet ist, dass die Gasauslassöffnung (103) einer Wand (406) des Modulgehäuses (402, 452) gegenüber steht, welches die zum Airbag (404, 454) entgegengesetzte Richtung ist.

13. Ein Airbagsystem (450), umfassend ein Aktivierungssignalausgabemittel mit einem Aufprallsensor und einer Steuereinheit, einen Hybridgasgenerator (100) nach einem der Ansprüche 1 bis 9 und ein Modulgehäuse (452) zur Aufnahme eines Airbags (454), wobei der Hybridgasgenerator (100) außerhalb des Modulgehäuses (452) angeordnet ist.

14. Ein Airbagsystem (450) nach Anspruch 13, in welchem der Hybridgasgenerator (100) und das Modulgehäuse (452) an der Gasauslassöffnung (103) des Hybridgasgenerators (100) und einer Gaseinführöffnung (456) des Modulgehäuses (452) miteinander verbunden und befestigt sind.

15. Ein Airbagsystem nach Anspruch 14, wobei der Hybridgasgenerator (100) und das Modulgehäuse (452) miteinander durch ein boxförmiges Element (457) verbunden und befestigt sind, welches den Hybridgasgenerator (100) an einer Außenwand des Modulgehäuses (452) fixiert und welches ein Gas zum Aufblasen des Airbags (454) in das Modulgehäuse (452) einleiten kann.

## Revendications

1. Gonfleur hybride (100) pour un dispositif de sécurité du type par gonflage (400, 450) d'un véhicule comportant un coussin gonflable de sécurité (404, 454), qui comprend un boîtier de gonfleur (101), une chambre de production de gaz (112, 152) reçue dans le boîtier de gonfleur (101) et comportant un agent générateur de gaz (116, 156), et une chambre de réception de moyen d'allumage (132, 172) comportant un moyen d'allumage (134, 174) qui est relié à la chambre de production de gaz (112, 152), dans lequel
le boîtier de gonfleur (101) comporte au moins deux espaces (110, 150) séparés par au moins une plaque de séparation (102) à agencer axialement en série, la chambre de production de gaz (112, 152) et la chambre de réception de moyen d'allumage (132, 172) sont disposées dans au moins un espace, en outre, une partie de l'espace excepté pour la chambre de réception de moyen d'allumage (132, 172) est chargée avec un milieu pressurisé,
un ou plusieurs passages de gaz (104) reliant les au moins deux espaces (110, 150) et un ou plusieurs orifices d'évacuation de gaz (103) reliés à un trajet d'écoulement de sortie du milieu pressurisé sont formés sur au moins une plaque de séparation (102),
**caractérisé par : le fait que** le au moins un orifice d'évacuation de gaz (103) communique avec uniquement un espace (110) comportant le moyen d'allumage (134) qui peut être activé chronologiquement en premier, ou un espace (110) dans lequel le moyen d'allumage (134) est disposé, par l'intermédiaire d'une plaque de rupture (105) obturant une partie désirée du trajet d'écoulement de sortie.

2. Gonfleur hybride (100) selon la revendication 1, dans lequel le boîtier de gonfleur comporte trois ou quatre espaces, ou plus, séparés par deux ou trois plaques de séparation (102), ou plus, à disposer axialement en série.

3. Gonfleur hybride (100) selon la revendication 1 ou 2, dans lequel la plaque de séparation comportant l'orifice d'évacuation de gaz (103) est agencée au niveau de la partie axiale centrale du boîtier de gonfleur (101) ou à proximité de celle-ci.

4. Gonfleur hybride (100) selon l'une quelconque des revendications 1 à 3, dans lequel l'orifice d'évacuation de gaz (103) est agencé dans la direction radiale de la plaque de séparation (102), l'orifice de communication (104) est agencé suivant l'épaisseur de la plaque de séparation (102), et l'orifice d'évacuation de gaz (103) et l'orifice de communication (104) ne se coupent pas l'un l'autre.

5. Gonfleur hybride (100) selon l'une quelconque des revendications 1 à 4, dans lequel un ou plusieurs orifices d'évacuation de gaz (103) sont agencés dans la partie pleine ou une partie de la surface périphérique de la plaque de séparation (102).

6. Gonfleur hybride (100) selon l'une quelconque des revendications 1 à 4, dans lequel plusieurs orifices d'évacuation de gaz (103) sont agencés sur une moitié ou moins de la surface périphérique de la plaque de séparation (102).

7. Gonfleur hybride (100) selon l'une quelconque des revendications 1 à 6, dans lequel la section efficace totale des orifices d'évacuation de gaz (103) est définie de manière à être inférieure à la section efficace totale des passages de gaz (104).

8. Gonfleur hybride (100) selon l'une quelconque des revendications 1 à 7, dans lequel la chambre de réception de moyen d'allumage (132, 172) comportant le moyen d'allumage (134, 174) est agencée axialement aux extrémités opposées ou à l'une ou l'autre des extrémités du boîtier de gonfleur (101).

9. Gonfleur hybride (100) selon l'une quelconque des revendications 1 à 8, dans lequel le milieu pressurisé est chargé à partir d'un seul orifice de chargement (190).

10. Dispositif formant coussin gonflable de sécurité (400, 450) comprenant un moyen de production de signal d'activation comportant un capteur de choc et une unité de commande et un coffret de module (402, 452) contenant un gonfleur hybride (100) selon l'une quelconque des revendications 1 à 9 et un coussin gonflable de sécurité (404, 454).

11. Dispositif formant coussin gonflable de sécurité (400, 450) selon la revendication 10, dans lequel le gonfleur hybride (100) est disposé dans le coffret de module (402, 452) de telle sorte que l'orifice d'évacuation de gaz (103) n'est pas orienté face au coussin gonflable de sécurité (404, 454).

12. Dispositif formant coussin gonflable de sécurité (400, 450) selon la revendication 11, dans lequel le gonfleur hybride (100) est disposé de telle sorte que l'orifice d'évacuation de gaz (103) est orienté face à une paroi (406) du coffret de module (402, 452) qui est orientée en sens opposé par rapport au coussin gonflable de sécurité (404,454).

13. Dispositif formant coussin gonflable de sécurité (450) comprenant un moyen de production de signal d'activation comportant un capteur de choc et une unité de commande, un gonfleur hybride (100) selon l'une quelconque des revendications 1 à 9 et un coffret de module (452) contenant un coussin gonflable de sécurité (454), dans lequel le gonfleur hybride (100) est disposé à l'extérieur du coffret de module (452).

14. Dispositif formant coussin gonflable de sécurité (450) selon la revendication 13, dans lequel le gonfleur hybride (100) et le coffret de module (452) sont raccordés et fixés l'un à l'autre au niveau de l'orifice d'évacuation de gaz (103) du gonfleur hybride (100) et d'un orifice d'introduction de gaz (456) du coffret de module (452).

15. Dispositif formant coussin gonflable de sécurité selon la revendication 14, dans lequel le gonfleur hybride (100) et le coffret de module (452) sont raccordés et fixés par un élément en forme de boîte (457) qui assure la fixation du gonfleur hybride (100) sur une paroi externe du coffret de module (452) et permet d'introduire un gaz afin d'assurer le gonflage du coussin gonflable de sécurité (454) dans le coffret de module (452).
